# FASCICULE DE BREVET EUROPEEN

(11) **EP 2 729 327 B1**
(45) Date de publication et mention de la délivrance du brevet: **10.06.2015**
(21) Numéro de dépôt: 12744041.0
(22) Date de dépôt: 02.07.2012
(51) Int. Cl.: B60N 2/60, B60N 2/58, B60N 2/68

(54) **DISPOSITIF DE FIXATION D'UNE COIFFE DE GARNISSAGE DE SIEGE AUTOMOBILE SUR L'ARMATURE DE SIEGE.**
VORRICHTUNG ZUR BEFESTIGUNG EINER POLSTERABDECKUNG EINES KRAFTFAHRZEUGSITZES AM SITZRAHMEN
DEVICE FOR ATTACHING AN UPHOLSTERY COVER OF A MOTOR VEHICLE SEAT TO THE SEAT FRAMEWORK

(30) Priorité: 04.07.2011 FR 1156013
(43) Date de publication de la demande: 14.05.2014
(73) Titulaire: Peugeot Citroën Automobiles SA, 78140 Vélizy Villacoublay (FR)
(72) Inventeur: GUENET, Mathieu, F-95370 Montigny Les Cormeilles (FR); COTTA, Gerald, F-78330 Fontenay Le Fleury (FR)
(74) Mandataire: Jeannin, Laurent Jean-Pierre
(86) Numéro de dépôt international: PCT/FR2012/051532
(87) Numéro de publication internationale: WO 2013/004960

(56) Documents cités:
- DE-C1- 10 250 504
- FR-A1- 2 853 598

## Description

L'invention concerne principalement un dispositif de fixation d'une coiffe de garnissage de siège automobile sur l'armature de siège.

L'invention porte en outre sur un véhicule automobile comportant au moins un tel dispositif.

Les sièges automobiles sont constitués d'une assise et d'un dossier monté la plus souvent pivotant relativement au dossier afin de permettre son escamotage.

L'assise et le dossier comportent chacun une armature de siège qui supporte un garnissage, le plus souvent en mousse, assurant le confort d'assise des occupants du véhicule automobile.

Le garnissage est recouvert d'une coiffe de garnissage en tissu ou en cuir selon le rendu souhaité.

Il existe différents dispositifs de fixation de la coiffe de garnissage à l'armature selon le type d'armatures de dossier et de siège utilisé. Le document FR-A-2853 598 montre un tel dispositif de fixation.

Lorsque l'armature est constituée d'une tôle pleine, les parties latérales de la coiffe de garnissage sont solidarisées sur la tôle au moyen d'une goulotte.

Mais ce type d'armature présente l'inconvénient de présenter un poids important. Or, la réduction des émissions de dioxyde de carbone passe notamment dans ce domaine par la réduction du poids des véhicules.

Une armature allégée en poids et connue consiste en un cadre tubulaire rigide et un réseau de fils d'acier à l'intérieur du cadre tubulaire.

Pour ce dernier type d'armature, la fixation des parties latérales de la coiffe de garnissage est assurée au moyen d'une fermeture à glissière.

Mais une fermeture à glissière présente plusieurs inconvénients.

D'une part, le rendu esthétique d'une fermeture à glissière est insatisfaisant, et d'autre part, la coiffe de garnissage peut être amenée à se déplacer relativement à l'armature au cours de son utilisation.

Dans ce contexte, la présente invention vise un dispositif de fixation d'une coiffe de garnissage de siège automobile sur une armature de siège allégée en poids, assurant une solidarisation fiable du garnissage à l'armature tout en conférant un rendu esthétique satisfaisant.

A cet effet, le dispositif de fixation de l'invention d'une coiffe de garnissage de siège automobile sur l'armature du dit siège est essentiellement caractérisé en ce qu'il comporte une pièce de fixation solidarisée à l'armature de siège et comprenant un système anti rotatif relativement à la dite armature de siège, et au moins un moyen de maintien d'au moins une partie latérale de la dite coiffe de garnissage relativement à la pièce de fixation.

Le dispositif de fixation de l'invention peut également comporter les caractéristiques optionnelles suivantes considérées isolément ou selon toutes les combinaisons techniques possibles :
- la pièce de fixation comporte une partie de solidarisation à au moins une partie du cadre de l'armature de siège.
- la partie de solidarisation de la pièce de fixation au cadre de l'armature de siège présente un profil assurant son encliquetage sur le cadre de la dite armature de siège.
- selon une première variante, le système anti rotatif comporte au moins un élément soudé au cadre de l'armature de siège, et une partie d'extension de la partie de solidarisation de la pièce de fixation rendant la dite partie de solidarisation apte à s'encliqueter de façon concomitante sur l'élément soudé et sur le cadre de l'armature de siège.
- l'élément soudé au cadre de l'armature de siège est un fil de diamètre suffisant pour que l'encliquetage de la partie de solidarisation de la pièce de fixation au cadre de l'armature de siège empêche la rotation de la dite partie de solidarisation relativement au dit cadre.
- le dispositif de l'invention comporte une pluralité de fils soudés sur le cadre de l'armature de siège au niveau de chacun desquels au moins une pièce de fixation est encliquetée sur le cadre de l'armature de siège au niveau de sa partie de solidarisation.
- selon une seconde variante, le profil de la partie de solidarisation de la pièce de fixation au cadre de l'armature de siège est non circulaire et apte à coopérer avec le profil du cadre également non circulaire, en formant ainsi un système anti-rotatif de la dite partie de solidarisation relativement au dit cadre.
- le moyen de maintien de la pièce de fixation à une partie latérale de la coiffe de garnissage comporte une zone coudée s'étendant depuis la partie de solidarisation de la pièce de fixation jusqu'à une extrémité libre pliée et dirigée vers la dite partie de solidarisation de la pièce de fixation.
- l'extrémité libre du moyen de maintien de la pièce de fixation à la partie latérale de la coiffe de garnissage est en forme générale de V.

D'autres caractéristiques et avantages de l'invention ressortiront clairement de la description qui en est donnée ci-dessous, à titre indicatif et nullement limitatif, en référence aux figures annexées parmi lesquelles :
- la figure 1 est une représentation schématique de face d'une armature de dossier de siège comportant une pluralité de fils soudés formant partie du dispositif de fixation de l'invention,
- la figure 2 est une vue agrandie de la partie cerclée et référencée II sur la figure 1,
- la figure 3 est une représentation schématique en coupe de dessous du dispositif de fixation de l'invention selon une première variante représenté maintenant la coiffe de garnissage de siège relativement à un premier type de cadre de l'armature d'un siège automobile,
- la figure 4 est une représentation en perspective d'une pièce de fixation du dispositif de fixation selon la première variante, et
- la figure 5 est une représentation schématique en coupe de dessous du dispositif de fixation de l'invention selon une seconde variante représenté en place sur un second type de cadre de l'armature d'un siège automobile.

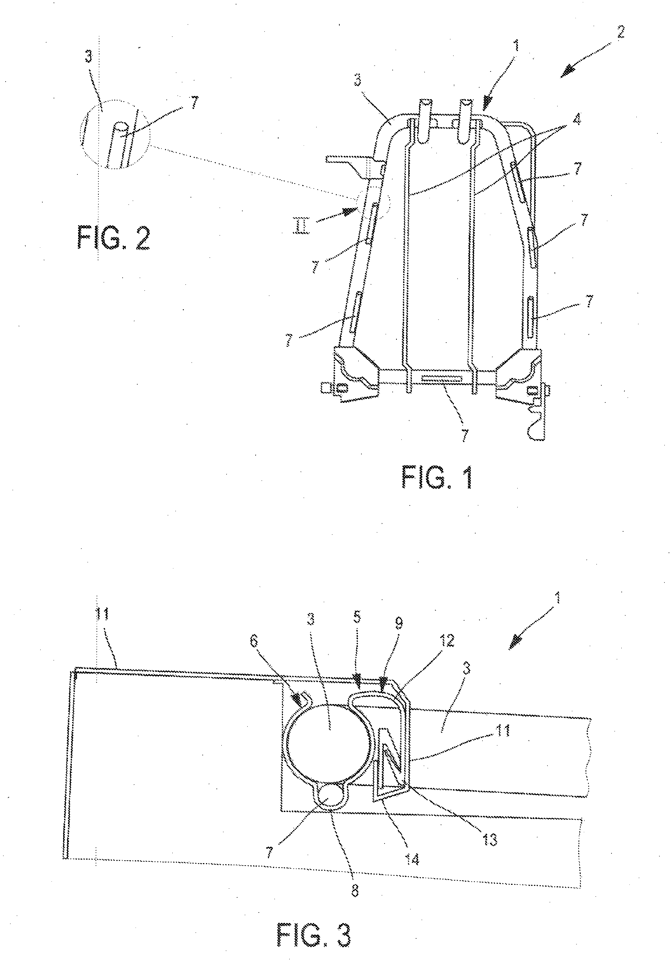

En référence à la figure 1, selon une première variante, l'armature 1 d'un dossier de siège automobile comporte un cadre tubulaire rigide 3 et un réseau de fils d'acier 4 constitué sur cette figure par deux fils d'acier verticaux 4.

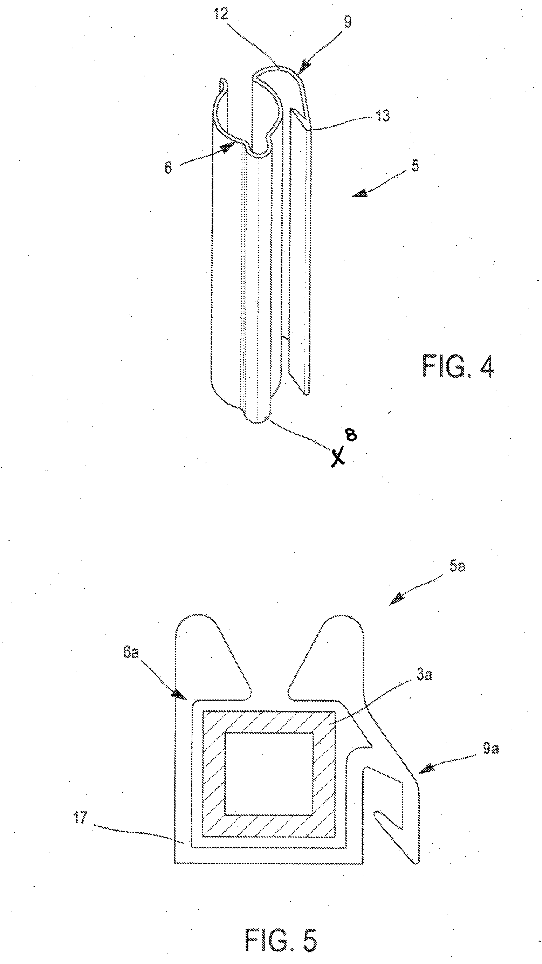

En référence aux figures 3 et 4, une pièce de fixation 5 formant partie du dispositif de fixation de l'invention comporte une partie de solidarisation 6 au cadre tubulaire 3 de l'armature 1 du siège.

Cette partie de solidarisation 6 est de forme générale circulaire ouverte permettant l'encliquetage de cette partie de solidarisation 6 sur la cadre tubulaire 3.

Par définition, la section du cadre tubulaire 3 est circulaire, de sorte que l'encliquetage de la partie de solidarisation 6 de la pièce de fixation 5 sur le cadre 3 pourrait engendrer à l'usage une rotation de la pièce de fixation 5 relativement au cadre 3 de l'armature 1 de siège.

C'est pourquoi, il est prévu selon l'invention que dans le cas ou la section du cadre 3 est circulaire, un fil d'acier 7 est soudé sur le cadre 3 de l'armature de siège 1 au niveau de la zone de fixation de la pièce de fixation 5 sur ce cadre 3.

La partie de solidarisation 6 de la pièce de fixation, comporte alors une partie d'extension 8 de forme coïncidant avec le fil soudée 7 se sorte que l'encliquetage de la partie de solidarisation 6 de la pièce de fixation 5 sur le cadre 3 de l'armature de siège 1 et sur le fil soudé 7, rend impossible la rotation de la partie de solidarisation 6, et donc de la pièce de fixation 5, relativement au cadre 3 de l'armature de siège 1.

Le fil soudé 7 est de diamètre suffisant pour que l'encliquetage de la partie de solidarisation 6 de la pièce de fixation 5 au cadre tubulaire 3 de l'armature de siège 1 empêche la rotation de la dite partie de solidarisation 6 relativement au dit cadre 3.

La pièce de fixation 5 comporte en outre un moyen de maintien 10 de la coiffe de garnissage 11.

Ce moyen de maintien 10 comporte une partie coudée 12 s'étendant depuis la partie de solidarisation 6 jusqu'à une extrémité libre 13 pliée et dirigée vers la partie de solidarisation 6.

L'extrémité libre 13 du moyen de maintien 10 de la pièce de fixation 5 est en forme de V en étant située à proximité de la partie de solidarisation 6 de cette pièce de fixation 5.

La configuration en V de l'extrémité libre 13 permet à la coiffe de garnissage 11 d'être maintenue en place relativement à la pièce de fixation 5 de la façon suivante.

La partie latérale 14 de la coiffe de garnissage 11 comporte un profilé 15, réalisé couramment en matière plastique, qui est solidarisé à la partie latérale 14 de la coiffe de garnissage 11 par exemple par collage, et qui présente une forme de V inversé.

Le profilé 15 de la coiffe de garnissage 11 vient ainsi s'emboiter dans l'extrémité libre 13 en V du moyen de maintien 10 en conférant d'une part une solidité de fixation de la coiffe de garnissage 11 relativement à la pièce de fixation 5, et en provoquant la tension de la coiffe de garnissage 11 ce qui assure un rendu esthétique satisfaisant.

Ainsi, la pièce de fixation 5 est d'une part solidement fixée au cadre tubulaire 3 de l'armature de siège 1 au moyen notamment d'un système anti rotatif 7,8 comportant le fil soudé 7 et la partie d'extension 8 de la partie de solidarisation 6 de la pièce de fixation 5, et assure d'autre part la fixation solide de la coiffe de garnissage 11 relativement à cette pièce de fixation 5, et donc également relativement au cadre tubulaire 3 de l'armature de siège 1.

En référence à la figure 1, on peut prévoir une multitude de fils soudés 7 le long du cadre 3 de l'armature de siège 1 au niveau de chacun desquels une pièce de fixation 5 telle que celle illustrée sur la figure 4 vient s'encliqueter sur le fil soudé 7 et sur le cadre 3 de l'armature de siège 1 à ce niveau.

En référence à la figure 5, lorsque la section du cadre 3a de l'armature de siège n'est pas circulaire, par exemple lorsqu'elle présente une section carrée comme représentée sur cette figure, le système anti rotatif 17 est constitué de la partie de solidarisation 6a de la pièce de fixation 5a qui présente un profil de section 17 coïncidant avec la section non circulaire du cadre 3a de l'armature de siège 1a.

Ces sections non circulaires et la partie de solidarisation 6a encliquetée sur le cadre 3a de l'armature de siège permettent d'empêcher la rotation de cette partie de solidarisation 6a et donc de la pièce de fixation 5a, relativement au cadre 3a de l'armature de siège 1.

Le moyen de maintien 9a de la coiffe de garnissage non représentée sur cette figure relativement à la pièce de fixation 5a présente une configuration analogue au moyen de maintien 9 illustré sur les figures 3 et 4.

## Revendications

1. Dispositif de fixation d'une coiffe de garnissage de siège automobile sur l'armature du dit siège, **caractérisé en ce qu'**il comporte une pièce de fixation (5,5a) solidarisée à l'armature de siège (1) et comprenant un système anti rotatif (7,8 ;17) relativement à la dite armature de siège (1), et au moins un moyen de maintien (9,9a) d'au moins une partie latérale (14) de la dite coiffe de garnissage (11) relativement à la pièce de fixation (5,5a), la pièce de fixation (5,5a) comportant une partie de solidarisation (6,6a) à au moins une partie du cadre (3,3a) de l'armature de siège (1), le moyen de maintien (9,9a) de la pièce de fixation (5,5a) à une partie latérale (14) de la coiffe de garnissage (11) comportant une zone coudée (12) s'étendant depuis la partie de solidarisation (6,6a) de la pièce de fixation (5,5a) jusqu'à une extrémité libre (13) pliée et dirigée vers la dite partie de solidarisation (6,6a) de la pièce de fixation (5,5a).

2. Dispositif selon la revendication 1, **caractérisé en ce que** la partie de solidarisation (6,6a) de la pièce de fixation (5,5a) présente un profil assurant son encliquetage sur le cadre (3,3a) de l'armature de siège (1).

3. Dispositif selon la revendication 2, **caractérisé en ce que** le système anti rotatif (7,8) comporte au moins un élément (7) soudé au cadre (3) de l'armature de siège (1), et une partie d'extension (8) de la partie de solidarisation (6) de la pièce de fixation (5) rendant la dite partie de solidarisation (6) apte à s'encliqueter de façon concomitante sur l'élément soudé (7) et sur le cadre (3) de l'armature de siège (1).

4. Dispositif selon la revendication 3, **caractérisé en ce que** l'élément (7) soudé au cadre (3) de l'armature de siège (1) est un fil (7) de diamètre suffisant pour que l'encliquetage de la partie de solidarisation (6) de la pièce de fixation (5) au cadre (3) de l'armature de siège (1) empêche la rotation de la dite partie de solidarisation (6) relativement au dit cadre (3).

5. Dispositif selon la revendication 4, **caractérisé en ce qu'**il comporte une pluralité de fils (7) soudés sur le cadre (3) de l'armature de siège (1) au niveau de chacun desquels au moins une pièce de fixation (5) est encliquetée sur le cadre (3) de l'armature de siège (1) au niveau de sa partie de solidarisation (6).

6. Dispositif selon la revendication 2, **caractérisé en ce que** le profil (17) de la partie de solidarisation (6a) de la pièce de fixation (5a) au cadre (3a) de l'armature de siège est non circulaire et apte à coopérer avec le profil du cadre (3) de l'armature de siège également non circulaire, en formant ainsi un système anti-rotatif (17) de la dite partie de solidarisation (6a) relativement au dit cadre (3a).

7. Dispositif selon la revendication 1, **caractérisé en ce que** l'extrémité libre (13) du moyen de maintien (6,6a) de la pièce de fixation (5,5a) à la partie latérale (14) de la coiffe de garnissage (11) est en forme générale de V.

8. Véhicule automobile, **caractérisé en ce qu'**il comporte au moins un dispositif de fixation selon l'une quelconque des revendications précédentes.

## Patentansprüche

1. Vorrichtung zur Befestigung einer Polsterabdeckung eines Kraftfahrzeugsitzes auf dem Rahmen des Sitzes, **dadurch gekennzeichnet, dass** sie ein Befestigungsteil (5, 5a) umfasst, das fest mit dem Sitzrahmen (1) verbunden ist und ein Drehschutzsystem (7, 8; 17) in Bezug auf den Sitzrahmen (1) und mindestens ein Haltemittel (9, 9a) mindestens eines seitlichen Teils (14) der Polsterabdeckung (11) in Bezug auf das Befestigungsteil (5, 5a) umfasst, wobei das Befestigungsteil (5, 5a) ein Verbindungsteil (6, 6a) an mindestens einem Teil des Rahmens (3, 3a) des Sitzrahmens (1) umfasst, wobei das Haltemittel (9, 9a) des Befestigungsteils (5, 5a) an einem seitlichen Teil (14) der Polsterabdeckung (11) eine abgewinkelte Zone (12) umfasst, die sich von dem Verbindungsteil (6, 6a) des Befestigungsteils (5, 5a) bis zu einem freien Ende (13), das gefaltet und zu dem Verbindungsteil (6, 6a) des Befestigungsteils (5, 5a) gerichtet ist, erstreckt.

2. Vorrichtung nach Anspruch 1, **dadurch gekennzeichnet, dass** das Verbindungsteil (6, 6a) des Befestigungsteils (5, 5a) ein Profil aufweist, das sein Einrasten auf dem Rahmen (3, 3a) des Sitzrahmens (1) sicherstellt.

3. Vorrichtung nach Anspruch 2, **dadurch gekennzeichnet, dass** das Drehschutzsystem (7, 8) mindestens ein Element (7) umfasst, das an den Rahmen (3) des Sitzrahmens (1) geschweißt ist, und ein Erweiterungsteil (8) des Verbindungsteils (6) des Befestigungsteils (5), das das Verbindungsteil (6) geeignet macht, gleichzeitig auf dem geschweißten Element (7) und auf dem Rahmen (3) des Sitzrahmens (1) einzurasten.

4. Vorrichtung nach Anspruch 3, **dadurch gekennzeichnet, dass** das an den Rahmen (3) des Sitzrahmens (1) geschweißte Element (7) ein Draht (7) mit Durchmesser ist, der ausreicht, damit das Einrasten des Verbindungsteils (6) des Befestigungsteils (5) an dem Rahmen (3) des Sitzrahmens (1) die Drehung des Verbindungsteils (6) in Bezug auf den Rahmen (3) verhindert.

5. Vorrichtung nach Anspruch 4, **dadurch gekennzeichnet, dass** sie eine Mehrzahl von Drähten (7) umfasst, die auf den Rahmen (3) des Sitzrahmens (1) im Bereich jedes des mindestens einen Befestigungsteils (5) auf dem Rahmen (3) des Sitzrahmens (1) im Bereich seines Verbindungsteils (6) geschweißt ist.

6. Vorrichtung nach Anspruch 2, **dadurch gekennzeichnet, dass** das Profil (17) des Verbindungsteils (6a) des Befestigungsteils des (5a) an dem Rahmen (3a) des Sitzrahmens nicht kreisförmig ist und geeignet ist, um mit dem Profil des Rahmens (3) des Sitzrahmens, das ebenfalls nicht kreisförmig ist, zusammenwirken, indem daher ein Drehschutzsystem (17) des Verbindungsteils (6a) in Bezug auf den Rahmen (3a) gebildet wird.

7. Vorrichtung nach Anspruch 1, **dadurch gekennzeichnet, dass** das freie Ende (13) des Haltemittels (6, 6a) des Befestigungsteils (5, 5a) an dem seitlichen Teil (14) der Polsterabdeckung (11) allgemeine V-Form hat.

8. Kraftfahrzeug, **dadurch gekennzeichnet, dass** es mindestens eine Befestigungsvorrichtung nach einem der vorhergehenden Ansprüche aufweist.

## Claims

1. A device for attaching an upholstery cover of a motor vehicle seat to the framework of said seat, **characterized in that** it comprises an attachment part (5, 5a) secured to the seat framework (1) and including a system (7, 8; 17) for preventing rotation relative to said seat framework (1), and at least one means (9, 9a) for holding at least one side portion (14) of said upholstery cover (11) relative to said attachment part (5, 5a), the attachment part (5, 5a) comprising a securing portion (6, 6a) to at least a portion of the frame (3, 3a) of the seat framework (1), the means (9, 9a) for holding the attachment part (5, 5a) to a side portion (14) of the upholstery cover (11) comprising an angled zone (12) extending from the securing portion (6, 6a) of the attachment part (5, 5a) to a free end (13) bent and directed towards said securing portion (6, 6a) of the attachment part (5, 5a) .

2. The device according to claim 1, **characterized in that** the securing portion (6, 6a) of the attachment part (5, 5a) has a profile ensuring its snapping onto the frame (3, 3a) of the seat framework (1).

3. The device according to claim 2, **characterized in that** the system (7, 8) for preventing rotation comprises at least one element (7) welded to the frame (3) of the seat framework (1), and an extension portion (8) of the securing portion (6) of the attachment part (5) making the said securing portion (6) able to snap in a concomitant manner on the welded element (7) and on the frame (3) of the seat framework (1).

4. The device according to claim 3, **characterized in that** the element (7) welded to the frame (3) of the seat framework (1) is a wire (7) of sufficient diameter so that the snapping of the securing portion (6) of the attachment part (5) to the frame (3) of the seat framework (1) prevents the rotation of said securing portion (6) relative to said frame (3).

5. The device according to claim 4, **characterized in that** it comprises a plurality of wires (7) welded on the frame (3) of the seat framework (1) at the level of each of which at least one attachment part (5) is snapped on the frame (3) of the seat framework (1) at the level of its securing portion (6).

6. The device according to claim 2, **characterized in that** the profile (17) of the securing portion (6a) of the attachment part (5a) to the frame (3a) of the seat framework is non-circular and is able to cooperate with the profile of the frame (3) of the seat framework, which is also non-circular, thus forming a rotation-preventing system (17) of the said securing portion (6a) relative to the said frame (3a).

7. The device according to claim 1, **characterized in that** the free end (13) of the holding means (6, 6a) of the attachment part (5, 5a) to the side portion (14) of the upholstery cover (11) is of a general V shape.

8. A motor vehicle, **characterized in that** it comprises at least one attachment device according to any one of the preceding claims.
